# EUROPÄISCHE PATENTSCHRIFT

(11) **EP 2 993 094 B1**
(45) Veröffentlichungstag und Bekanntmachung des Hinweises auf die Patenterteilung: **07.06.2017**
(21) Anmeldenummer: 15172080.2
(22) Anmeldetag: 15.06.2015
(51) Int. Cl.: B60T 10/02, F16D 57/04, F16D 57/00

(54) **HYDRODYNAMISCHER RETARDER**
HYDRODYNAMIC RETARDER
RETARDATEUR HYDRODYNAMIQUE

(30) Priorität: 14.07.2014 DE 102014213635
(43) Veröffentlichungstag der Anmeldung: 09.03.2016
(73) Patentinhaber: ZF Friedrichshafen AG, 88046 Friedrichshafen (DE)
(72) Erfinder: STEINBERGER, Florian, 88326 Aulendorf (DE); HUEBLER, Wolfgang, 88284 Wolpertswende (DE); SIMPFENDOERFER, Heiko, 88045 Friedrichshafen (DE); STUETZLE, Peter, 88213 Ravensburg (DE)

(56) Entgegenhaltungen:
- WO-A2-01/84007
- DE-C1- 3 722 477
- US-A- 2 989 004

## Beschreibung

Die Erfindung betrifft einen hydrodynamischen Retarder sowie ein Getriebe bzw. ein Fahrzeug, das mit einem derartigen hydrodynamischen Retarder ausgestattet ist. Hydrodynamische Retarder sind als Dauerbremsen in Nutzfahrzeugen wie Lastkraftwagen und Bussen seit langem bekannt. Sie sind in der Lage, ohne eigenen Verschleiß das Fahrzeug auf einer Gefällstrecke entweder auf eine gewünschte bzw. zulässige Geschwindigkeit abzubremsen oder aber auch auf einer längeren Gefällstrecke das Fahrzeug bei einer gewünschten Geschwindigkeit zu halten. Hydrodynamische Retarder werden vorzugsweise mit Öl oder Wasser betrieben. Dabei kann das Öl einem separaten Ölhaushalt entnommen werden, der nur für den Retarder vorgesehen ist, oder aber auch einem gemeinsamen Ölhaushalt mit einem Getriebe entstammen, dem der Retarder zugeordnet oder an dem der Retarder befestigt ist. WO01/84007 A2 beschreibt einen hydrodynamischen Retarder mit gespitzten Schaufelkanten. Hydrodynamische Retarder werden weiterhin unterschieden nach Primärretardern und Sekundärretardern, wobei der Primärretarder entweder getriebeeingangsseitig entsprechend der Getriebeeingangsdrehzahl oder aber motorseitig abhängig von der Motordrehzahl betrieben wird. Ein Sekundärretarder hingegen wird mit der getriebeabtriebsseitigen Drehzahl betrieben, die in direkter Abhängigkeit zur Fahrzeuggeschwindigkeit steht, wobei häufig die Getriebeabtriebsdrehzahl über eine aus Zahnrädern gebildete Hochtreiberstufe noch ins Schnelle übersetzt wird.

Die bei einer Bremsung in einem hydrodynamischen Retarder im Arbeitsmedium Öl oder Wasser erzeugte Wärme wird über einen Wärmetauscher entweder unmittelbar im Fahrzeugkühlsystem an die Umgebung abgegeben oder über den Wärmetauscher an das Fahrzeugkühlsystem abgegeben.

In ihrem Aufbau weisen hydrodynamische Retarder einen mit dem umgebenden Gehäuse fest montierten oder an diesem festsetzbaren Stator auf, sowie einen mit einer Rotorwelle verbundenen Rotor. Rotor und Stator verfügen über eine Anzahl von Schaufeln, die in dem von Rotor und Stator als Arbeitsraum ausgebildeten Torusraum ausgebildet sind. Teilweise wird über die Schaufeln auch das Arbeitsmedium in den Arbeitsraum eingeführt.

Bei der Drehung des Rotors wird das Arbeitsmedium im Arbeitsraum zwischen Rotor und Stator in einem Strömungskreislauf hin- und her bewegt. Durch den Austausch des Arbeitsmediums zwischen drehendem Rotor und dem stehenden Stator wird der Rotor verzögert, während sich das Arbeitsmedium aufheizt. Üblicherweise wird das Arbeitsmedium dabei im radial äußeren Bereich vom Rotor auf den Stator übergeben, im Stator in dem zwischen zwei Schaufeln befindlichen Bereich umgelenkt und anschließend im radial inneren Bereich des Arbeitsraumes vom Stator zum Rotor wieder zurückübergeben. Die Schaufeln sind zumeist schräg in dem Torusraum angeordnet. Die der Drehung entgegengesetzte Seite einer Schaufel wird als Druckseite bezeichnet, während die andere bzw. gegenüberliegende Seite der Schaufel die Saugseite darstellt.

Die Schaufeln des Retarders weisen an den Kanten, die nicht mit dem Schaufelgrund verbunden sind, häufig Abschrägungen auf. Die Kreislaufströmung des Arbeitsmediums folgt während des Betriebs des Retarders der Kontur der Schaufeln und damit auch den Abschrägungen.

Derartig abgeschrägte Schaufeln sind beispielsweise aus der DE 1625836 C bekannt geworden. Die dort verwendeten Schaufeln weisen abgeschrägte Schaufelkanten an Rotor und Stator auf, die über ihre gesamte Länge vom radial innenliegenden Bereich bis zum radial außenliegenden Bereich gleich verlaufen.

Wie bereits erwähnt folgt das Arbeitsmedium der Schaufelgeometrie. Durch die Abschrägung der Schaufelkanten ist der Abströmwinkel nach dem Stand der Technik geringer als der eigentliche zwischen dem Schaufelgrund und der Schaufel gebildete Schaufelwinkel. Hierdurch entsteht bei der Übergabe der Strömung beim Strömungsverlauf an der Schaufelkante des gegenüberliegenden Schaufelrades eine Druckspitze. Durch diesen schlagartigen Druckanstieg entsteht eine typische Schädigung durch Kavitationserosion. Darüber hinaus entsteht durch die Kavitation auch ein höherer Geräuschpegel.

Gegenüber dem Stand der Technik stellt sich der Erfindung die Aufgabe, die Schaufelform eines hydrodynamischen Retarders und mit einem derartigen Retarder ausgestatteter Getriebe und Fahrzeuge weiter zu verbessern.

Die Aufgabe wird gelöst durch einen hydrodynamischen Retarder mit den Merkmalen des Anspruchs 1 sowie durch Getriebe nach Anspruch 5 und Fahrzeuge nach Anspruch 6. Ausgestaltungen der Erfindung sind Gegenstand von Unteransprüchen.

Die Erfindung schlägt dazu einen hydrodynamischer Retarder mit einem Rotorschaufeln aufweisenden Rotor und einem Statorschaufeln aufweisenden Stator vor. An wenigstens einer Schaufel des Rotors und an wenigstens einer Schaufel des Stators ist eine Abschrägung der Schaufelkante vorgesehen. An den Schaufeln bildet sich bei einer Rotation des Rotors eine Saugseite und eine Druckseite aus und die Schaufeln weisen einen von einer Rotationsachse entfernten, radial äußeren Bereich und einen der Rotationsachse näherliegenden, radial inneren Bereich auf. Nach der Erfindung weist der Stator im radial äußeren Bereich die Abschrägung der wenigstens einen Statorschaufel auf der Saugseite und im radial inneren Bereich auf der Druckseite auf, während der Rotor im radial äußeren Bereich die Abschrägung der wenigstens einen Rotorschaufel auf der Druckseite und im radial inneren Bereich auf der Saugseite aufweist.

Vorzugsweise ist der Kantenwinkel an dem Bereich der Schaufel, der Arbeitsmedium an das jeweils andere Bauteil (Rotor oder Stator) im Arbeitsraum übergibt, größer ausgebildet ist als der Schaufelwinkel dieser Schaufel. Dies gilt für Rotorschaufeln gleichermaßen wie für Statorschaufeln. Somit ist sowohl die Übergabe von Arbeitsmittel vom Rotor in den Stator als auch die Übergaben von Stator in den Rotor betroffen.

Mit Kantenwinkel ist der Winkel zwischen der dem Arbeitsraum zugewandten Seite von Rotor oder Stator und der Abschrägung der Schaufelkante bezeichnet, während die Bezeichnung Schaufelwinkel sich auf den Winkel zwischen der dem Arbeitsraum zugewandten Seite von Rotor oder Stator und der Schaufelwand bezieht. Der Schaufelwinkel ist auch gleich dem zwischen Schaufelgrund und Schaufel gebildeten Winkel.

Eine vorzugsweise Ausgestaltung zeigt, dass der Kantenwinkel auf der Druckseite der Arbeitsmedium abgebenden Schaufel (Rotor oder Stator) größer ausgebildet ist als der Schaufelwinkel dieser Schaufel.

Durch diese Maßnahmen wird die kreisförmige Strömung des Arbeitsmediums im Torusraum so beeinflusst, dass sich die Abströmung des Arbeitsmediums vom Rotor auf den Stator im radial äußeren Bereich steiler verläuft, wodurch eine im Wesentlichen der Schaufelform entsprechende Anströmung im Stator realisiert werden kann. In gleicher Weise wird auch im radial innenliegenden Bereich die Anströmung vom Stator zum Rotor steiler, wodurch auch hier eine annähernd der Schaufelform entsprechende Anströmung im Rotor erzielt werden kann.

Die im Stand der Technik bekannte Druckspitze, die zur Kavitationserosion führt, entsteht bei der erfinderischen Anordnung der Schaufelkante nicht. Die vorgeschlagene Abschrägung ermöglicht eine längere Führung der Strömung entlang der Beschaufelung. Durch eine längere Strömungsführung entlang der Rotorbeschaufelung wird die Strömung länger beschleunigt. Zusätzlich wird durch die längere Strömungsführung im Stator die Strömung länger verzögert. Sowohl die längere Beschleunigung im Rotor als auch die längere Verzögerung im Stator führen zu einer Leistungssteigerung des hydrodynamischen Retarders. Durch die Änderung der Anströmrichtung wird zudem eine Verringerung der Stoßverluste erzielt.

Gelegentlich werden hydrodynamische Retarder mit Zuführkanälen in einzelnen Schaufeln des Rotors oder des Stators ausgebildet. Vorzugsweise sind nach der Erfindung die Abschrägungen in denjenigen Schaufeln vorgesehen sind, die keine Zufuhröffnungen für ein Arbeitsmittels des hydrodynamischen Retarders bereitstellen.

Ein die erfinderischen Merkmale aufweisender hydrodynamischer Retarder kann vorzugsweise in einem Getriebe oder in einem Fahrzeug vorgesehen sein, wobei der in dem Fahrzeug vorgesehen Retarder in einem Fahrzeuggetriebe oder an einer anderen Stelle im Fahrzeugantriebsstrang angeordnet sein kann.

Die Erfindung wird anhand einer Zeichnung näher beschrieben.

Es zeigen:
Fig. 1 einen hydrodynamischen Retarder nach Stand der Technik
Fig. 2 die Anordnung der Schaufelkanten in unterschiedlichen Bereichen
Fig. 3 eine perspektivische Ansicht einer Rotor- und einer Statorschaufel
Fig. 4 eine weitere Ansicht einer Rotorschaufel
Fig. 5 eine Gesamtansicht eines Rotors

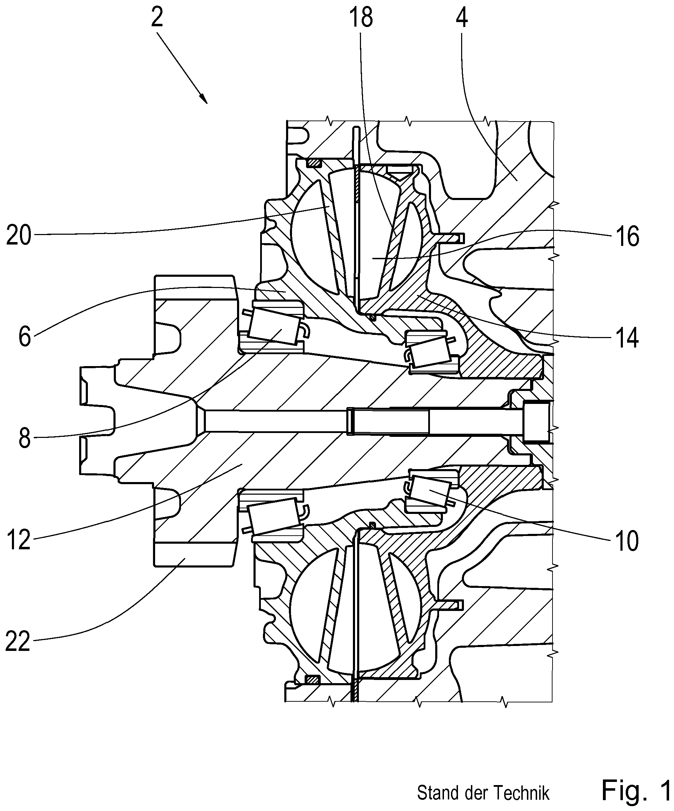

Die Fig. 1 zeigt einen hydrodynamischen Retarder 2 nach dem Stand der Technik. In einem Gehäuse 4 ist ein Stator 6 fest angeordnet. Innerhalb des Stators 6 sind zwei Kegelrollenlager 8, 10 vorgesehen, die eine Rotorwelle 12 drehbar lagern. Auf der Rotorwelle 12 fest angeordnet ist der Rotor 14 vorgesehen. Rotor 14 und Stator 6 bilden zusammen einen Torusraum oder Arbeitsraum 16 aus, innerhalb dessen das Arbeitsmedium des hydrodynamischen Retarders 2 zumindest im eingeschalteten Bremsbetrieb vorgesehen ist. Im Arbeitsraum 16 weist der Rotor 14 eine hier geschnitten dargestellte Rotorschaufel 18 auf, während der Stator 6 hier eine ebenfalls geschnitten dargestellte Statorschaufel 20 zeigt. An der Rotorwelle 12 fest angeordnet ist ein Hochtreiberrad 22, das als Bestandteil einer hier nicht gezeigten Hochtreiberstufe mit der Abtriebswelle eines Fahrzeuggetriebes zusammenwirkt zum Antrieb des Retarders 2.

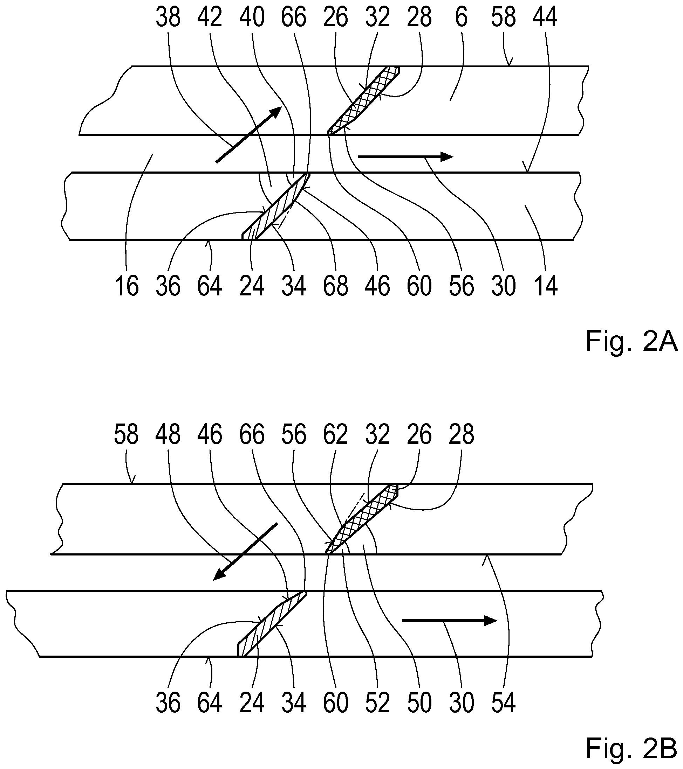

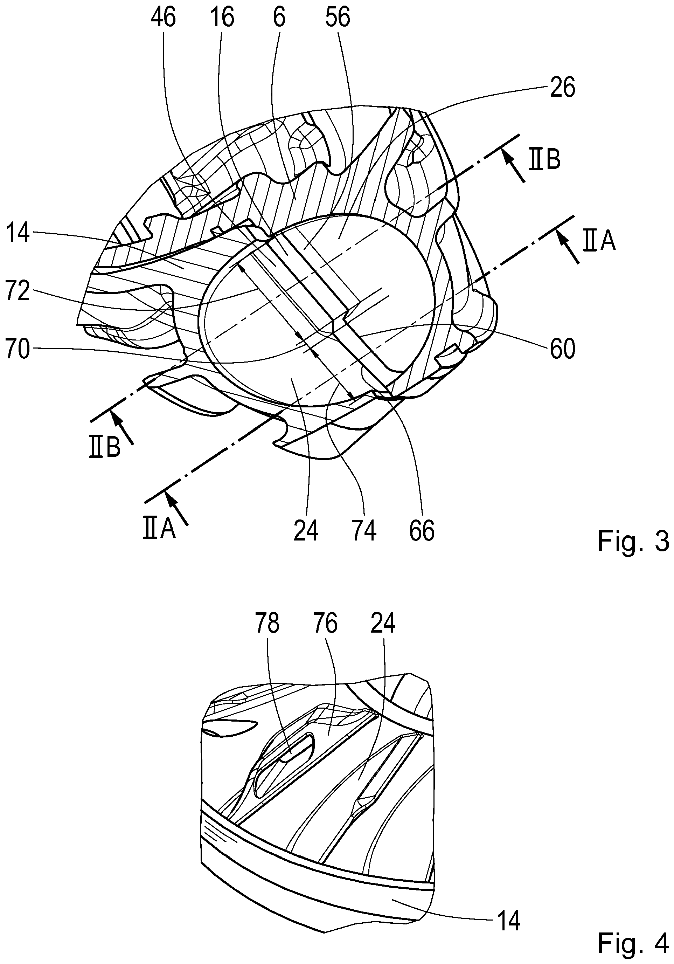

Die Fig. 2 zeigt in einem ersten Teil (Fig. 2A) den radial äußeren Teil von Rotor 14 und Stator 6 entsprechend einer in Fig. 3 gezeigten Schnittlinie IIA. Gezeigt sind hier von Rotor 14 und Stator 6 nur jeweils eine Rotorschaufel 24 und eine Statorschaufel 26. Die in der Fig. 2A auf der rechten Seite der Statorschaufel 26 gezeigte Schaufelseite 28 entspricht der Saugseite der Statorschaufel 26 bei einer Rotationsrichtung des Rotors 14 entsprechend des Richtungspfeiles 30. Dementsprechend stellt die in der Fig. 2A auf der linken Seite der Statorschaufel 26 gezeigte Schaufelseite 32 die Druckseite der Statorschaufel 26 dar.

Bezogen auf den Rotor 14 stellt die in der Fig. 2A auf der rechten Seite der Rotorschaufel 24 gezeigte Schaufelseite 34 die Druckseite der Rotorschaufel 24 dar bei einer Rotationsrichtung des Rotors 14 entsprechend des Richtungspfeiles 30. Dementsprechend stellt auch die in der Fig. 2A auf der linken Seite der Rotorschaufel 24 gezeigte Schaufelseite 36 die Saugseite der Rotorschaufel 24 dar.

Im in der Fig. 2A gezeigten radial äußeren Bereich von Rotor 14 und Stator 6 wird das im Arbeitsraum 16 befindliche Arbeitsmedium entsprechend des Richtungspfeiles 38 vom Rotor 14 in den Stator 6 übergeben. Dadurch, dass an der Rotorschaufel 24 der Kantenwinkel 42 größer ist als der Schaufelwinkel 40, wird die Abströmung aus dem Rotor 14 in den Stator 6 steiler. Der Schaufelwinkel 40 wird dabei gebildet zwischen der Seite 44 des Rotors 14 und der Schaufelseite 36, während der Kantenwinkel 42 zwischen der Seite 44 des Rotors 14 und der Abschrägung 46 an der Schaufelkante der Rotorschaufel 24 gebildet wird.

Die Fig. 2 zeigt in einem zweiten Teil (Fig. 2B) den radial inneren Teil von Rotor 14 und Stator 6 entsprechend einer in Fig. 3 gezeigten Schnittlinie IIB. Die in der Fig. 2B auf der rechten Seite der Statorschaufel 26 gezeigte Schaufelseite 28 entspricht auch hier der Saugseite der Statorschaufel 26 bei einer Rotationsrichtung des Rotors 14 entsprechend des Richtungspfeiles 30. Dementsprechend stellt auch in der Fig. 2B die auf der linken Seite der Statorschaufel 26 gezeigte Schaufelseite 32 die Druckseite der Statorschaufel 26 dar.

Auch bezogen auf den Rotor 14 stellt die in der Fig. 2B auf der rechten Seite der Rotorschaufel 24 gezeigte Schaufelseite 34 die Druckseite der Rotorschaufel 24 dar bei einer Rotationsrichtung des Rotors 14 entsprechend des Richtungspfeiles 30. Dementsprechend stellt auch die in der Fig. 2B auf der linken Seite der Rotorschaufel 24 gezeigte Schaufelseite 36 die Saugseite der Rotorschaufel 24 dar.

Im in der Fig. 2B gezeigten radial inneren Bereich von Rotor 14 und Stator 6 wird das im Arbeitsraum 16 befindliche Arbeitsmedium entsprechend des Richtungspfeiles 48 vom Stator 6 in den Rotor 14 übergeben. Dadurch, dass an der Statorschaufel 26 der Kantenwinkel 50 größer ist als der Schaufelwinkel 52, wird auch hier die Abströmung aus dem Stator 6 in den Rotor 14 steiler. Der Schaufelwinkel 52 wird dabei gebildet zwischen der Seite 54 des Stators 6 und der Schaufelseite 28, während der Kantenwinkel 50 zwischen der Seite 54 des Stators 6 und der Abschrägung 56 an der Schaufelkante der Statorschaufel 26 gebildet wird.

Die beiden Kantenwinkel 50 und 42 sind im Wesentlichen gleich groß. Auch die beiden Schaufelwinkel 40 und 52 sind im Wesentlichen gleich groß.

In der erfinderischen Anordnung nach Fig. 2 ist die Schaufelseite 32 der Rotorschaufel 26 im radial äußeren Bereich von einem Schaufelgrund 58 bis zur Schaufelkante 60 durchgängig geradlinig und ohne Abschrägung ausgebildet, während die gleiche Schaufelseite 32 der gleichen Rotorschaufel 26 im radial inneren Bereich vom Schaufelgrund 58 ausgehend zunächst geradlinig verläuft und ab einem Knickpunkt 62 zur Schaufelkante 60 hin die Abschrägung 56 aufweist. In ähnlicher Weise ist die Schaufelseite 34 der Rotorschaufel 24 im radial inneren Bereich von einem Schaufelgrund 64 bis zur Schaufelkante 66 durchgängig geradlinig und ohne Abschrägung ausgebildet, während die gleiche Schaufelseite 34 der gleichen Rotorschaufel 24 im radial äußeren Bereich vom Schaufelgrund 64 ausgehend zunächst geradlinig verläuft und ab einem Knickpunkt 68 zur Schaufelkante 66 hin die Abschrägung 46 aufweist.

Die Fig. 3 zeigt eine Rotorschaufel 24 im Rotor 14, die einer Statorschaufel 26 im Stator 6 gegenüberliegt. Die Schaufelkante 60 am Stator 6 und die Schaufelkante 66 am Rotor 14 liegen sich sowohl im radial inneren Bereich 72, der der hier nicht gezeigten Rotationsachse des Rotors näherliegt, und dem radial äußeren Bereich 74, der von der Rotationsachse des Rotors weiter entfernt ist, gegenüber. Beide Schaufelkanten 60 und 66 erfahren einen Knick in einem Übergangsbereich 70 zwischen dem radial inneren Bereich 72 und dem radial äußeren Bereich 74. Der Übergangsbereich 70 weist vorzugsweise eine dreiecksförmige Fläche auf.

Fig. 4 zeigt einen Ausschnitt aus der Beschaufelung eines Rotors 14, bei dem neben der Rotorschaufel 24 eine weitere Rotorschaufel 76 zu sehen ist, die eine Zuführöffnung 78 für Arbeitsmedium des Retarders 2 aufweist. Die Rotorschaufel 76 zeigt dabei vorzugsweise keine unterschiedlichen Schaufelkantenverläufe für einen radial innenliegenden und einen radial außenliegenden Bereich.

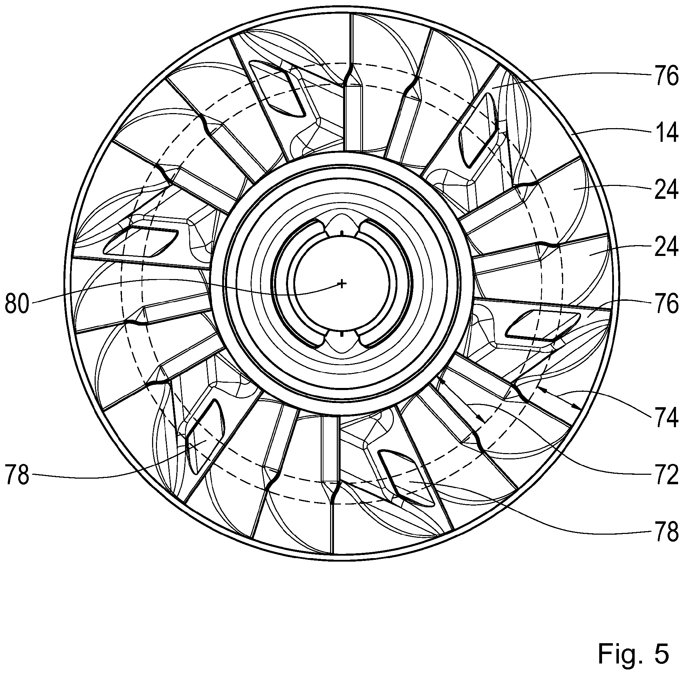

Einen Schaufelkranz mit mehreren Rotorschaufeln 24 ohne Zuführungen und dazwischenliegend mehrere Rotorschaufeln 76 mit Zuführöffnungen 78 zeigt die Fig. 5. Deutlich ist die unterschiedliche Gestaltung des radial inneren Bereichs 72, der näher zur Rotationsachse 80 des Rotors 14 liegt, und des radial äußeren Bereichs 74, der weiter von der Rotationsachse 80 entfernt liegt, bei den Rotorschaufeln 24 zu sehen.

### Bezugszeichen

- 2: Retarder
- 4: Gehäuse
- 6: Stator
- 8: Kegelrollenlager
- 10: Kegelrollenlager
- 12: Rotorwelle
- 14: Rotor
- 16: Arbeitsraum
- 18: Rotorschaufel
- 20: Statorschaufel
- 22: Hochtreiberrad
- 24: Rotorschaufel
- 26: Statorschaufel
- 28: Schaufelseite
- 30: Richtungspfeil
- 32: Schaufelseite
- 34: Schaufelseite
- 36: Schaufelseite
- 38: Richtungspfeil
- 40: Schaufelwinkel
- 42: Kantenwinkel
- 44: Seite
- 46: Abschrägung
- 48: Richtungspfeil
- 50: Kantenwinkel
- 52: Schaufelwinkel
- 54: Seite
- 56: Abschrägung
- 58: Schaufelgrund
- 60: Schaufelkante
- 62: Knickpunkt
- 64: Schaufelgrund
- 66: Schaufel kante
- 68: Knickpunkt
- 70: Übergangsbereich
- 72: Radial innerer Bereich
- 74: Radial äußerer Bereich
- 76: Rotorschaufel
- 78: Zuführöffnung
- 80: Rotationsachse

## Patentansprüche

1. Hydrodynamischer Retarder (2) mit einem Rotorschaufeln (24) aufweisenden Rotor (14) und einem Statorschaufeln (26) aufweisenden Stator (6), wobei an wenigstens einer Rotorschaufel (24) und an wenigstens einer Statorschaufel (26) eine Abschrägung (46, 56) der Schaufelkante (60, 66) vorgesehen ist und sich an den Schaufeln (24, 26) bei einer Rotation des Rotors (14) eine Saugseite und eine Druckseite ausbildet, und die Schaufeln (24, 26) einen von einer Rotationsachse (80) des Rotors (14) entfernten, radial äußeren Bereich (74) und einen der Rotationsachse (80) näherliegenden, radial inneren Bereich (72) aufweisen, **dadurch gekennzeichnet, dass** der Stator (6) im radial äußeren Bereich (74) die Abschrägung (56) der wenigstens einen Statorschaufel (26) auf der Saugseite und im radial inneren Bereich (72) auf der Druckseite aufweist, während der Rotor (14) im radial äußeren Bereich (74) die Abschrägung (46) der wenigstens einen Rotorschaufel (24) auf der Druckseite und im radial inneren Bereich (72) auf der Saugseite aufweist.

2. Hydrodynamischer Retarder (2) nach Anspruch 1, **dadurch gekennzeichnet, dass** der Kantenwinkel (42) an dem radial äußeren Bereich (74) der Rotorschaufel (24) größer ausgebildet ist als der Schaufelwinkel (40) dieser Rotorschaufel (24) in diesem radial äußeren Bereich (74) und dass der Kantenwinkel (50) an dem radial inneren Bereich (72) der Statorschaufel (26) größer ausgebildet ist als der Schaufelwinkel (52) dieser Statorschaufel (26) in diesem radial inneren Bereich (72).

3. Hydrodynamischer Retarder (2) nach Anspruch 1 oder 2, **dadurch gekennzeichnet, dass** der Kantenwinkel (42, 50) auf der Druckseite der Arbeitsmedium abgebenden Schaufel (24, 26) größer ausgebildet ist als der Schaufelwinkel (40, 52) dieser Schaufel (24, 26).

4. Hydrodynamischer Retarder (2) nach einem der Ansprüche 1 bis 3, **dadurch gekennzeichnet, dass** die Abschrägungen (46, 56) in den Schaufeln (24, 26) vorgesehen sind, die keine Zufuhröffnungen (78) für ein Arbeitsmittels des hydrodynamischen Retarders (2) bereitstellen.

5. Getriebe mit einem hydrodynamischen Retarder (2), **dadurch gekennzeichnet, dass** der hydrodynamische Retarder (2) die Merkmale der Ansprüche 1 bis 4 aufweist.

6. Fahrzeug mit einem hydrodynamischen Retarder (2), **dadurch gekennzeichnet, dass** der hydrodynamische Retarder (2) die Merkmale der Ansprüche 1 bis 4 aufweist.

## Claims

1. Hydrodynamic retarder (2) having a rotor (14) which has rotor blades (24) and a stator (6) which has stator blades (26), a bevelled portion (46, 56) of the blade edge (60, 66) being provided on at least one rotor blade (24) and on at least one stator blade (26), and a suction side and a pressure side being formed on the blades (24, 26) during a rotation of the rotor (14), and the blades (24, 26) having a radially outer region (74) which is remote from a rotational axis (80) of the rotor (14) and a radially inner region (72) which lies closer to the rotational axis (80), **characterized in that** the stator (6) has the bevelled portion (56) of the at least one stator blade (26) on the suction side in the radially outer region (74) and on the pressure side in the radially inner region (72), whereas the rotor (14) has the bevelled portion (46) of the at least one rotor blade (24) on the pressure side in the radially outer region (74) and on the suction side in the radially inner region (72).

2. Hydrodynamic retarder (2) according to Claim 1, **characterized in that** the edge angle (42) on the radially outer region (74) of the rotor blade (24) is of greater configuration than the blade angle (40) of the said rotor blade (24) in the said radially outer region (74), and **in that** the edge angle (50) on the radially inner region (72) of the stator blade (26) is of greater configuration than the blade angle (52) of the said stator blade (26) in the said radially inner region (72).

3. Hydrodynamic retarder (2) according to Claim 1 or 2, **characterized in that** the edge angle (42, 50) on the pressure side of the blade (24, 26) which outputs operating medium is of greater configuration than the blade angle (40, 52) of the said blade (24, 26).

4. Hydrodynamic retarder (2) according to one of Claims 1 to 3, **characterized in that** the bevelled portions (46, 56) are provided in the blades (24, 26) which do not provide any feed openings (78) for an operating medium of the hydrodynamic retarder (2).

5. Transmission having a hydrodynamic retarder (2), **characterized in that** the hydrodynamic retarder (2) has the features of Claims 1 to 4.

6. Vehicle having a hydrodynamic retarder (2), **characterized in that** the hydrodynamic retarder (2) has the features of Claims 1 to 4.

## Revendications

1. Retardateur hydrodynamique (2) comprenant un rotor (14) présentant des pales de rotor (24) et un stator (6) présentant des pales de stator (26), un biseautage (46, 56) de l'arête de pale (60, 66) étant prévu au niveau d'au moins une pale de rotor (24) et au niveau d'au moins une pale de stator (26) et constituant un côté d'aspiration et un côté de pression au niveau des pales (24, 26) lors d'une rotation du rotor (14), et les pales (24, 26) présentant une région radialement extérieure (74) éloignée d'un axe de rotation (80) du rotor (14) et une région radialement intérieure (72) plus proche de l'axe de rotation (80), **caractérisé en ce que** le stator (6) présente, dans la région radialement extérieure (74), le biseautage (56) de l'au moins une pale de stator (26) sur le côté d'aspiration et dans la region radialement intérieure (72) sur le côté de pression, tandis que le rotor (14), présente, dans la région radialement extérieure (74), le biseautage (46) de l'au moins une pale de rotor (24) sur le côté de pression et dans la région radialement intérieure (72) sur le côté d'aspiration.

2. Retardateur hydrodynamique (2) selon la revendication 1, **caractérisé en ce que** l'angle d'arête (42) au niveau de la région radialement extérieure (74) de la pale de rotor (24) est superieur à l'angle de pale (40) de cette pale de rotor (24) dans cette région radialement extérieure (74) et **en ce que** l'angle d'arête (50) au niveau de la région radialement intérieure (72) de la pale de stator (26) est supérieur à l'angle de pale (52) de cette pale de stator (26) dans cette région radialement intérieure (72).

3. Retardateur hydrodynamique (2) selon la revendication 1 ou 2, **caractérisé en ce que** l'angle d'arête (42, 50) sur le cote de pression de la pale (24, 26) fournissant un fluide de travail est supérieur à l'angle de pale (40, 52) de cette pale (24, 26).

4. Retardateur hydrodynamique (2) selon l'une quelconque des revendications 1 à 3, **caractérisé en ce que** les biseautages (46, 56) sont prévus dans les pales (24, 26), qui ne fournissent aucune ouverture d'alimentation (78) pour un fluide de travail du retardateur hydrodynamique (2).

5. Transmission comprenant un retardateur hydrodynamique (2), **caractérisée en ce que** le retardateur hydrodynamique (2) présente les caractéristiques des revendications 1 à 4.

6. Véhicule comprenant un retardateur hydrodynamique (2), **caractérisé en ce que** le retardateur hydrodynamique (2) présente les caractéristiques des revendications 1 à 4.
